# EUROPEAN PATENT SPECIFICATION

(11) **EP 4 090 125 B1**
(45) Date of publication and mention of the grant of the patent: **02.10.2024**
(21) Application number: 21750180.8
(22) Date of filing: 21.01.2021
(51) Int. Cl.: H04W 74/08, H04W 74/00, H04W 74/0833

(54) **INFORMATION REPORTING METHOD AND APPARATUS, INFORMATION RECEIVING METHOD AND APPARATUS, TERMINAL, AND NETWORK SIDE DEVICE**
VERFAHREN UND VORRICHTUNG ZUM MELDEN VON INFORMATIONEN, VERFAHREN UND VORRICHTUNG ZUM INFORMATIONSEMPFANG, ENDGERÄT UND NETZSEITIGE VORRICHTUNG
PROCÉDÉ ET APPAREIL DE RAPPORT D'INFORMATIONS, PROCÉDÉ ET APPAREIL DE RÉCEPTION D'INFORMATIONS, TERMINAL, ET DISPOSITIF CÔTÉ RÉSEAU

(30) Priority: 07.02.2020 CN 202010082243
(43) Date of publication of application: 16.11.2022
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: XIE, Fang, Beijing 100032 (CN); LIU, Guangyi, Beijing 100032 (CN)
(74) Representative: J A Kemp LLP
(86) International application number: PCT/CN2021/073117
(87) International publication number: WO 2021/155743

(56) References cited:
- WO-A1-2018/126417
- WO-A2-2012/141483
- CN-A- 109 246 831
- CN-A- 109 286 942
- CN-A- 109 983 829
- KR-A- 20190 118 626
- US-A1- 2019 132 882
- SAMSUNG: "Further Logged Information in NR MDT", vol. RAN WG2, no. Reno, USA; 20191118 - 20191122, 8 November 2019 (2019-11-08), XP051817644, Retrieved from the Internet <URL:https://ftp.3gpp.org/tsg_ran/WG2_RL2/TSGR2_108/Docs/R2-1916095.zip R2-1916095.doc> [retrieved on 20191108]

## Description

### TECHNICAL FIELD

The disclosure relates to the technical field of communications, in particular to an information reporting method and apparatus, an information receiving method and apparatus, a terminal and a network device.

### BACKGROUND

For terminals and base stations operating in an unlicensed frequency band, Listen before talk (LBT) operation must be performed before data is sent every time. If a channel is listened to be busy, listening is performed again after the backoff time. The channel may be considered idle until the channel is idle for a period of time, and then the data is sent. In order to reduce the delay of random access, the operations of a 4-step random access mechanism in the conventional art may be reduced to 2 operations, thereby reducing the number of times of LBT and implementing the reduction of the overall delay of random access.

Due to the advantages of two-step random access, such as fewer operations and short delay, the application scenario thereof is naturally extended to a licensed frequency band. That is, 2-step random access is accessible to both the unlicensed frequency band and the licensed frequency band.

In addition, for a handover scenario, a target base station may allocate a special random access resource to a terminal in a handover command, so as to prevent the terminal from colliding with other terminals in the process of random access to a target cell, thereby improving the speed of the terminal accessing the target cell.

Usually, when initiating 2-step or 4-step random access, the terminal does not establish a connection with the network, so the network device does not know the random access performance of the terminal. Therefore, the network device cannot optimize the network coverage or parameters.

### SUMMARY

The invention is set out in the appended set of claims. Embodiments of the disclosure aim to provide an information reporting method, an information receiving method and apparatus, a terminal, and a network device, so as to solve the problem that the network device cannot know the performance of the terminal in the conventional art.

In order to solve the above problem, at least one embodiment of the disclosure provides an information reporting method according to claim 1. Optional features are set out in dependent claims 2 to 4.

At least one embodiment of the disclosure further provides an information receiving method according to claim 5. Optional features are set out in dependent claims 6 to 7.

At least one embodiment of the disclosure further provides a communication device according to claim 8.

At least one embodiment of the disclosure further provides a computer readable storage medium according to claim 9.

The technical solution of the disclosure has the following beneficial effects.

In the information reporting method, information receiving method and apparatus, terminal and network device of at least one embodiment of the disclosure, the related information of the random access initiated by the terminal is recorded by the terminal and reported to the network device, so as to facilitate the network device to configure one or more reasonable random access related parameters or perform network coverage optimization, thereby improving the random access efficiency and network performance.

### BRIEF DESCRIPTION OF THE DRAWINGS

FIG. 1 illustrates a flowchart of operations of an information reporting method according to at least one embodiment of the disclosure.
FIG. 2 illustrates a flowchart of operations of an information receiving method according to at least one embodiment of the disclosure.
FIG. 3 illustrates a schematic structural diagram of an information reporting apparatus according to at least one embodiment of the disclosure.
FIG. 4 illustrates a schematic structural diagram of a terminal according to at least one embodiment of the disclosure.
FIG. 5 illustrates a schematic structural diagram of an information receiving apparatus according to at least one embodiment of the disclosure.
FIG. 6 illustrates a schematic structural diagram of a network device according to at least one embodiment of the disclosure.

### DETAILED DESCRIPTION

In order to make the technical problems to be solved, technical solutions, and advantages of the disclosure clearer, detailed descriptions are made below with reference to the accompanying drawings and specific embodiments.

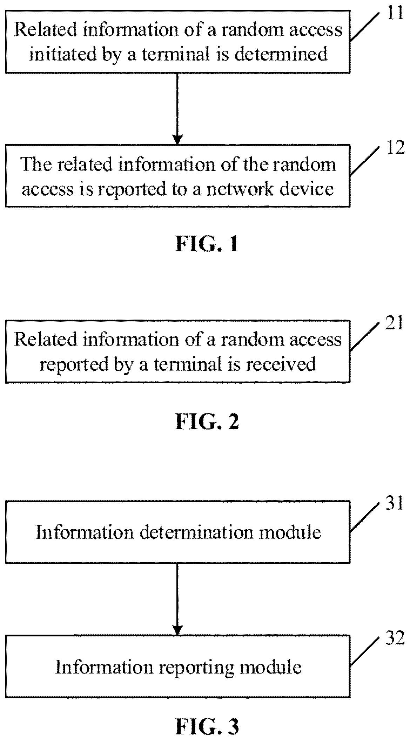

As shown in FIG. 1, at least one embodiment of the disclosure provides an information reporting method, which is applied to a terminal and includes the following operations.

At 11, related information of a random access initiated by a terminal is determined.

At 12, the related information of the random access is reported to a network device.

According to at least one embodiment of the disclosure, the related information of the random access initiated by the terminal is recorded by the terminal and reported to the network device, so as to facilitate the network device to configure a reasonable random access related parameter(s) or perform network coverage optimization, thereby improving the random access efficiency and network performance.

As an optional embodiment, the related information of the random access includes at least one of the following:
a type of the random access initiated by the terminal, the type of the random access includes at least one of the following: 2-step CBRA; 2-step CFRA; 4-step CBRA; or 4-step CFRA;
a scenario of the random access initiated by the terminal;
a feedback message from the network device received by the terminal after sending a message A (the message A is a first message of the 2-step random access) of 2-step random access, or indication information indicating whether the terminal receives a random access fallback message after sending the message A of the 2-step random access or whether to fall back according to the received random access fallback message;
time difference between the time when the terminal sends the message A of 2-step random access and the time when the terminal receives the feedback message from the network device;
whether contention is detected in the case where the terminal initiates 2-step random access;
whether configuration of the network device allows the terminal to switch or fall back to CBRA, the CBRA is: 4-step CBRA or 2-step CBRA;
whether the configuration of the network device allows the terminal to switch or fall back to 4-step CBRA, the 4-step CBRA is 4-step CBRA or 4-step CFRA;
the number of times configured on the network device that the terminal attempts the 2-step random access before switching or falling back to the 4-step random access;
the number of messages A sent when the terminal switches or falls back to another type of random access from the 2-step random access, for example, the number of msgA that UE has sent when falling back from 2-step CFRA to 2-step CBRA or 4-step CBRA;
a type of a carrier where the random access initiated by the terminal is located, for example, the type of carrier includes: UpLink (UL) and Supplementary UpLink (SUL);
the reason why the terminal selects the carrier where the random access is located;
whether the bandwidth part (BWP) where the current random access is located is the same as the BWP where the last random access is located;
information of the BWP where the random access selected by the terminal is located; or
a type of random access supported by the BWP where the random access selected by the terminal is located, such as 2-step CFRA, 2-step CBRA or 4-step CBRA.

As at least one embodiment of the disclosure, the scenario of the random access includes at least one of the following:
an initial access scenario;
a handover scenario;
a reconfiguration scenario with synchronization (that is, reconfiguration With Sync);
a beam fault recovery (BFR) scenario; or
a random access scenario fallen back or switched from another random access type. For example, the 4-step CBRA currently initiated by the terminal is fallen back or switched from the previous 2-step CFRA or 2-step CBRA.

As at least one embodiment of the disclosure, the feedback message from the network device received by the terminal after sending the message A of 2-step random access includes any of the following:
a random access response message (Success RAR);
a random access fallback message (Fallback RAR); and
a backoff indication message (Backoff Indication).

As at least one embodiment of the disclosure, the information of the BWP where the random access selected by the terminal is located includes at least one of the following:
location and bandwidth of the BWP;
a subcarrier spacing of the BWP; or
whether the BWP uses an extended cyclic prefix (CP).

As at least one embodiment of the disclosure, the reason why the terminal selects the carrier where the random access is located includes any one of the following.

The carrier is configured by the network device, for example, the network device instructs the terminal to select UL or SUL.

The carrier is selected by the terminal according to selection conditions for different types of carriers configured by the network device. For example, the terminal selects the UL or SUL according to a comparison result of Reference Signal Reception Power (RSRP) or Reference Signal Reception Quality (RSRQ) or Signal to Interference plus Noise Ratio (SINR) with a corresponding threshold.

In at least one optional embodiment of the disclosure, the operation at 11 includes the following operation.

According to configuration of network management or configuration of a tracking collection entity (TCE) or configuration of a base station or pre-definition (such as protocol pre-definition), the terminal records the related information of the random access.

As another optional embodiment of the disclosure, the operation at 12 includes the following operations.

A request message sent by the network device for requesting the terminal to report the related information of the random access is received.

According to the request message, the related information of the random access is reported to the network device.

As at least one embodiment of the disclosure, before the request message sent by the network device for requesting the terminal to report the related information of the random access is received, the method further includes the following operation.

Indication information is sent to the network device. The indication information is used to indicate that the terminal records the related information of the random access.

In other words, the method for reporting the related information of the random access by the terminal to the network device includes the following three ways.
1. The network device requests the terminal to report through the request message.
2. The terminal reports actively.
3. After the terminal informs the network device that the terminal records the related information of the random access, the network device requests the terminal to report through the request message.

As at least one embodiment of the disclosure, the operation at 12 includes the following operations.

In an RRC connected state, the terminal reports the related information of the random access to the network device.

Or, in the process of the terminal entering the RRC connected state, the terminal reports the related information of the random access to the network device.

Or, in an idle state or inactive state, the terminal reports the related information of the random access to the network device.

The related information of the random access is carried by at least one of the following messages:
a target message, for example, the target message is a newly defined message, which is not specifically limited here; or
a random access report.

According to at least one embodiment of the disclosure, the related information of the random access initiated by the terminal is recorded by the terminal and reported to the network device, so as to facilitate the network device to configure one or more reasonable random access related parameters or perform network coverage optimization, etc., thereby improving the random access efficiency and network performance.

As shown in FIG. 2, at least one embodiment of the disclosure further provides an information receiving method, which is applied to a network device and includes the following operation.

At 21, related information of a random access reported by a terminal is received.

As an optional embodiment, the related information of the random access includes at least one of the following:
a type of the random access initiated by the terminal, the type of the random access includes at least one of the following: 2-step CBRA; 2-step CFRA; 4-step CBRA; or 4-step CFRA;
a scenario of the random access initiated by the terminal;
a feedback message from the network device received by the terminal after sending a message A (the message A is a first message of the 2-step random access) of 2-step random access, or indication information indicating whether the terminal receives a random access fallback message after sending the message A of the 2-step random access or whether to fall back according to the received random access fallback message;
time difference between the time when the terminal sends the message A of 2-step random access and the time when the terminal receives the feedback message from the network device;
whether contention is detected in the case where the terminal initiates 2-step random access;
whether configuration of the network device allows the terminal to switch or fall back to CBRA, the CBRA is: 4-step CBRA or 2-step CBRA;
whether the configuration of the network device allows the terminal to switch or fall back to 4-step CBRA, the 4-step CBRA is 4-step CBRA or 4-step CFRA;
the number of times configured on the network device that the terminal attempts the 2-step random access before switching or falling back to the 4-step random access;
the number of messages A sent when the terminal switches or falls back to another type of random access from the 2-step random access, for example, the number of msgA that UE has sent when falling back from 2-step CFRA to 2-step CBRA or 4-step CBRA;
a type of a carrier where the random access initiated by the terminal is located, for example, the type of carrier includes: UpLink (UL) and Supplementary UpLink (SUL);
the reason why the terminal selects the carrier where the random access is located;
whether the bandwidth part (BWP) where the current random access is located is the same as the BWP where the last random access is located;
information of the BWP where the random access selected by the terminal is located; or
a type of random access supported by the BWP where the random access selected by the terminal is located, such as 2-step CFRA, 2-step CBRA or 4-step CBRA.

As at least one embodiment of the disclosure, the scenario of the random access includes at least one of the following:
an initial access scenario;
a handover scenario;
a reconfiguration scenario with synchronization (that is, reconfiguration With Sync);
a beam fault recovery (BFR) scenario; or
a random access scenario fallen back or switched from another random access type. For example, the 4-step CBRA currently initiated by the terminal is fallen back or switched from the previous 2-step CFRA or 2-step CBRA.

As at least one embodiment of the disclosure, the feedback message from the network device received by the terminal after sending the message A of 2-step random access includes any of the following:
a random access response message (Success RAR);
a random access fallback message (Fallback RAR); and
a backoff indication message (Backoff Indication).

As at least one embodiment of the disclosure, the information of the BWP where the random access selected by the terminal is located includes at least one of the following:
location and bandwidth of the BWP;
a subcarrier spacing of the BWP; or
whether the BWP uses an extended cyclic prefix (CP).

As at least one embodiment of the disclosure, the reason why the terminal selects the carrier where the random access is located includes at least one of the following.

The carrier is configured by the network device, for example, the network device instructs the terminal to select UL or SUL.

The carrier is selected by the terminal according to selection conditions for different types of carriers configured by the network device. For example, the terminal selects the UL or SUL according to a comparison result of Reference Signal Reception Power (RSRP) or Reference Signal Reception Quality (RSRQ) or Signal to Interference plus Noise Ratio (SINR) with a corresponding threshold.

In at least one optional embodiment of the disclosure, before the operation at 21, the method further includes the following operation.

The terminal is configured to record the related information of the random access.

As another optional embodiment of the disclosure, before the operation at 21, the method further includes the following operation.

A request message for requesting the terminal to report the related information of the random access is sent to the terminal.

As at least one embodiment of the disclosure, before the request message for requesting the terminal to report the related information of the random access is sent to the terminal, the method further includes the following operation.

Indication information sent by the terminal is received, and the indication information is used to indicate that the terminal records the related information of the random access.

In other words, the method for reporting the related information of the random access by the terminal to the network device includes the following three ways.
1. The network device requests the terminal to report through the request message.
2. The terminal reports actively.
3. After the terminal informs the network device that the terminal records the related information of the random access, the network device requests the terminal to report through the request message.

The related information of the random access is carried by at least one of the following messages:
a target message, for example, the target message is a newly defined message, which is not specifically limited here; or
a random access report.

In at least one embodiment of the disclosure, the above related information of the random access may help the network device to configure a reasonable random access type (2-step, 4-step, CBRA, CFRA) and one or more related parameters (an RSRP threshold of 2-step random access, the number of times of attempting 2-step random access, etc.) on a suitable carrier (SUL/UL) and BWP.

After receiving the related information of the random access reported by the terminal, the network device may perform corresponding network coverage and parameter optimization, such as optimizing the type of random access supported by the terminal on SUL or UL and BWP, the quality threshold of 2-step random access, and the threshold of the number of times of attempting 2-step random access, and optimizing the coverage corresponding to the message A including beam-level and cell-level coverage optimization, etc. For example:
1) According to the related information of the random access reported by the terminal, the network device may locate the scenario and type of random access that needs to be optimized. For example, the scenario where the random access fails is 2-step CFRA in a handover scenario, and the terminal does not correctly complete the 2-step CFRA expected by the network device. The reason may be that a random access preamble of a dedicated random access resource allocated to the terminal collides with that in a neighbor cell, or the threshold of the RSRP configured to the terminal for 2-step CFRA is too low, resulting in that although the RSRP detected by the terminal meets the threshold configured on the network device, msg A is not successfully detected by the base station side (herein, the base station may successfully obtain the preamble and return a fallback indication to the terminal; even the preamble has not been successfully obtained, and the network device returns a backoff indication to the terminal), so that the 2-step CFRA process cannot be completed normally. Therefore, the network device may coordinate the preamble group with the neighbor cell to avoid collision (for example, when the preamble is successfully obtained), or increase the threshold of RSRP of the terminal for 2-step CFRA (for example, when the preamble is not successfully obtained), so as to improve the success rate of detection of msgA by the network device.
2) According to the related information of the random access reported by the terminal, the network device may determine the length of time that the terminal receives the corresponding feedback after sending the msg A, so as to determine whether the feedback speed of the base station in some scenarios, especially the scenario such as CFRA with high delay requirements, shall be improved, and avoid the terminal from waiting for the feedback from the network device for a long time.
3) According to the related information of the random access reported by the terminal, for example, the terminal initiates the 2-step CBRA and detects the collision, and the network device receives similar reports from multiple terminals, then the network device may determine that the number of preambles allocated to the 2-step CBRA is too small, resulting in a high probability of collision; or the threshold of RSRP configured on the network device for 2-step CBRA is too low, resulting in too many terminals for 2-step CBRA, so the collision probability is high. Therefore, the network device may adjust the threshold and/or preamble group of RSRP for the 2-step CBRA.
4) According to the related information of the random access reported by the terminal, the network device may further locate the specific carrier (SUL or common UL) and specific BWP (the network device may determine the specific BWP according to the information such as locationandbandwidth, a subcarrier spacing SCS, or the like) on which a random access problem occurs, and the network device may pertinently adjust the configuration of the random access resource of the corresponding carrier or BWP, or adjust the indication of the network device for instructing the terminal to select SUL or UL (when the SUL or UL on the carrier is indicated by the network device, instead of being in the form of configured threshold to select SUL or UL).
5) According to the related information of the random access reported by the terminal, the network device may determine whether to support the terminal to fall back to 4-step RACH. If the RSRP measured by the terminal is not very high in an edge coverage area of a certain carrier or BWP, the failure probability that the terminal performs the 2-step RACH in the edge area is high. If the terminal is not supported to fall back to the 4-step RACH, the terminal may be unable to complete the random access process.
6) According to the related information of the random access reported by the terminal, the network device may determine whether the number of times of 2-step RACH attempts allowed for terminal is configured reasonably. If the number of times N is configured too large, the terminal may attempt 2-step RACH for too many times, and eventually fall back to 4-step RACH, resulting in the terminal attempting the 2-step RACH for too long. If the number of times N is configured too small, the fallback process may easily occur to the terminal, so that fewer terminals can benefit from the 2-step RACH process.

According to at least one embodiment of the disclosure, the related information of the random access initiated by the terminal is recorded by the terminal and reported to the network device, which helps the network device to configure one or more reasonable random access related parameters or perform network coverage optimization, etc., thereby improving the random access efficiency and network performance.

As shown in FIG. 3, at least one embodiment of the disclosure further provides an information reporting apparatus, which is applied to a terminal and includes: an information determination module 21 and an information reporting module 22.

The information determination module 21 is configured to determine related information of a random access initiated by the terminal.

The information reporting module 22 is configured to report the related information of the random access to a network device.

As at least one embodiment of the disclosure, the related information of the random access includes at least one of the following:
a type of the random access initiated by the terminal;
a scenario of the random access initiated by the terminal;
a feedback message from the network device received by the terminal after sending a message A of 2-step random access, or indication information indicating whether the terminal receives a random access fallback message after sending the message A of 2-step random access or whether to fall back according to the received random access fallback message;
time difference between the time when the terminal sends the message A of 2-step random access and the time when the terminal receives the feedback message from the network device;
whether contention is detected in the case where the terminal initiates 2-step random access;
whether configuration of the network device allows the terminal to switch or fall back to CBRA;
whether the configuration of the network device allows the terminal to switch or fall back to 4-step random access;
the number of times configured on the network device that the terminal attempts the 2-step random access before switching or falling back to the 4-step random access;
the number of messages A sent when the terminal switches or falls back to another type of random access from the 2-step random access;
a type of a carrier in which the random access initiated by the terminal is located;
the reason why the terminal selects the carrier where the random access is located;
whether the bandwidth part (BWP) where the current random access is located is the same as the BWP where the last random access is located;
information of the BWP where the random access selected by the terminal is located; or
a type of random access supported by the BWP where the random access selected by the terminal is located.

As at least one embodiment of the disclosure, the type of the random access includes at least one of the following:
2-step CBRA;
2-step CFRA;
4-step CBRA; or
4-step CFRA.

As at least one embodiment of the disclosure, the scenario of the random access includes at least one of the following:
an initial access scenario;
a handover scenario;
a reconfiguration scenario with synchronization;
a beam fault recovery (BFR) scenario; or
a random access scenario fallen back or switched from another random access type.

As at least one embodiment of the disclosure, the feedback message from the network device received by the terminal after sending the message A of 2-step random access includes:
a random access response message;
a random access fallback message; or
a backoff indication message.

As at least one embodiment of the disclosure, the information of the BWP where the random access selected by the terminal is located includes at least one of the following:
location and bandwidth of the BWP;
a subcarrier spacing of the BWP; or
whether the BWP uses an extended cyclic prefix (CP).

As at least one embodiment of the disclosure, the reason why the terminal selects the carrier where the random access is located includes one of the following.

The carrier is configured by the network device.

The carrier is selected by the terminal according to selection conditions for different types of carriers configured by the network device.

As at least one embodiment of the disclosure, the information determination module includes an information determination submodule.

The information determination submodule is configured to record, according to configuration of network management or configuration of a tracking collection entity (TCE) or configuration of a base station or pre-definition, the related information of the random access.

As at least one embodiment of the disclosure, the information reporting module includes: a first submodule, and a second submodule.

The first submodule is configured to receive a request message sent by the network device for requesting the terminal to report the related information of the random access.

The second submodule is configured to report the related information of the random access to the network device according to the request message.

As at least one embodiment of the disclosure, the apparatus further includes a third submodule.

The third submodule is configured to send indication information to the network device. The indication information is used for indicating that the terminal records the related information of the random access.

As at least one embodiment of the disclosure, the information reporting module includes a fourth submodule.

The fourth submodule is configured to enable the terminal to report the related information of the random access to the network device in an RRC connected state, or, to report the related information of the random access to the network device in the process of the terminal entering the RRC connected state, or, to report the related information of the random access to the network device in an idle state or inactive state.

As at least one embodiment of the disclosure, the related information of the random access is carried by at least one of a target message or a random access report.

According to at least one embodiment of the disclosure, the related information of the random access initiated by the terminal is recorded by the terminal and reported to the network device, which helps the network device to configure one or more reasonable random access related parameters or perform network coverage optimization, thereby improving the random access efficiency and network performance.

It is to be noted that the information reporting apparatus provided by at least one embodiment of the disclosure is an apparatus capable of executing the above information reporting method, so all embodiments of the above information reporting method are applicable to the apparatus and all can achieve the same or similar beneficial effects.

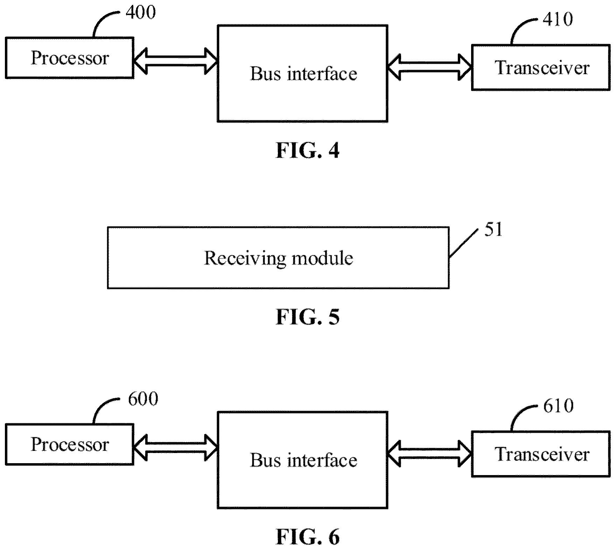

As shown in FIG. 4, at least one embodiment of the disclosure also provides a terminal including a processor 400 and a transceiver 410. The transceiver 410 receives and transmits data under the control of the processor 400, and the processor 400 is configured to determine related information of a random access initiated by a terminal, and report the related information of the random access to a network device.

As at least one embodiment of the disclosure, the related information of the random access includes at least one of the following:
a type of the random access initiated by the terminal;
a scenario of the random access initiated by the terminal;
a feedback message from the network device received by the terminal after sending a message A of 2-step random access, or indication information indicating whether the terminal receives a random access fallback message after sending the message A of 2-step random access or whether to fall back according to the received random access fallback message;
time difference between the time when the terminal sends the message A of 2-step random access and the time when the terminal receives the feedback message from the network device;
whether contention is detected in the case where the terminal initiates 2-step random access;
whether configuration of the network device allows the terminal to switch or fall back to CBRA;
whether the configuration of the network device allows the terminal to switch or fall back to 4-step random access;
the number of times configured on the network device that the terminal attempts the 2-step random access before switching or falling back to the 4-step random access;
the number of messages A sent when the terminal switches or falls back to another type of random access from the 2-step random access;
a type of a carrier in which the random access initiated by the terminal is located;
the reason why the terminal selects the carrier where the random access is located;
whether the bandwidth part (BWP) where the current random access is located is the same as the BWP where the last random access is located;
information of the BWP where the random access selected by the terminal is located; or
a type of random access supported by the BWP where the random access selected by the terminal is located.

As at least one embodiment of the disclosure, the type of the random access includes at least one of the following:
2-step CBRA;
2-step CFRA;
4-step CBRA; or
4-step CFRA.

As at least one embodiment of the disclosure, the scenario of the random access includes at least one of the following:
an initial access scenario;
a handover scenario;
a reconfiguration scenario with synchronization;
a beam fault recovery (BFR) scenario; or
a random access scenario fallen back or switched from another random access type.

As at least one embodiment of the disclosure, the feedback message from the network device received by the terminal after sending the message A of 2-step random access includes:
a random access response message;
a random access fallback message; or
a backoff indication message.

As at least one embodiment of the disclosure, the information of the BWP where the random access selected by the terminal is located includes at least one of the following:
location and bandwidth of the BWP;
a subcarrier spacing of the BWP; or
whether the BWP uses an extended cyclic prefix (CP).

As at least one embodiment of the disclosure, the reason why the terminal selects the carrier where the random access is located includes one of the following.

The carrier is configured by the network device.

The carrier is selected by the terminal according to selection conditions for different types of carriers configured by the network device.

As at least one embodiment of the disclosure, the processor is further configured to enable the terminal to record the related information of the random access according to configuration of network management or configuration of a tracking collection entity (TCE) or configuration of a base station or pre-definition.

As at least one embodiment of the disclosure, the processor is further configured to receive a request message sent by the network device for requesting the terminal to report the related information of the random access, and report the related information of the random access to the network device according to the request message.

As at least one embodiment of the disclosure, the processor is further configured to send indication information to the network device. The indication information is used to indicate that the terminal records the related information of the random access.

As at least one embodiment of the disclosure, the processor is further configured to enable the terminal to report the related information of the random access to the network device in an RRC connected state, or, report the related information of the random access to the network device in the process of the terminal entering the RRC connected state, or, report the related information of the random access to the network device in an idle state or inactive state.

As at least one embodiment of the disclosure, the related information of the random access is carried by at least one of a target message or a random access report.

According to at least one embodiment of the disclosure, the related information of the random access initiated by the terminal is recorded by the terminal and reported to the network device, which helps the network device to configure one or more reasonable random access related parameters or perform network coverage optimization, thereby improving the random access efficiency and network performance.

It is to be noted that the terminal provided by at least one embodiment of the disclosure is a terminal capable of executing the above information reporting method, so all embodiments of the above information reporting method are applicable to the terminal and all can achieve the same or similar beneficial effects.

At least one embodiment of the disclosure further provides a communication device. The communication device is a terminal and includes a memory, a processor and a computer program stored on the memory and runnable on the processor. When executing the program, the processor implements each process in the information reporting method embodiments as described above and can achieve the same technical effect, which is not described here to avoid repetition.

At least one embodiment of the disclosure also provides a computer readable storage medium, on which a computer program is stored. When executed by a processor, the program implements each process of the information reporting method embodiments as described above and can achieve the same technical effect, which is not described here to avoid repetition. The computer readable storage medium may be, such as a Read-Only Memory (ROM), a Random Access Memory (RAM), a magnetic disk or an optical disk.

As shown in FIG. 5, at least one embodiment of the disclosure further provides an information receiving apparatus, which is applied to a network device and includes a receiving module 51.

The receiving module 51 is configured to receive related information of a random access reported by a terminal.

As at least one embodiment of the disclosure, the related information of the random access includes at least one of the following:
a type of the random access initiated by the terminal;
a scenario of the random access initiated by the terminal;
a feedback message from the network device received by the terminal after sending a message A of 2-step random access, or indication information indicating whether the terminal receives a random access fallback message after sending the message A of 2-step random access or whether to fall back according to the received random access fallback message;
time difference between the time when the terminal sends the message A of 2-step random access and the time when the terminal receives the feedback message from the network device;
whether contention is detected in the case where the terminal initiates 2-step random access;
whether configuration of the network device allows the terminal to switch or fall back to CBRA;
whether the configuration of the network device allows the terminal to switch or fall back to 4-step random access;
the number of times configured on the network device that the terminal attempts the 2-step random access before switching or falling back to the 4-step random access;
the number of messages A sent when the terminal switches or falls back to another type of random access from the 2-step random access;
a type of a carrier in which the random access initiated by the terminal is located;
the reason why the terminal selects the carrier where the random access is located;
whether the bandwidth part (BWP) where the current random access is located is the same as the BWP where the last random access is located;
information of the BWP where the random access selected by the terminal is located; or
a type of random access supported by the BWP where the random access selected by the terminal is located.

As at least one embodiment of the disclosure, the type of the random access includes at least one of the following:
2-step CBRA;
2-step CFRA;
4-step CBRA; or
4-step CFRA.

As at least one embodiment of the disclosure, the scenario of the random access includes at least one of the following:
an initial access scenario;
a handover scenario;
a reconfiguration scenario with synchronization;
a beam fault recovery (BFR) scenario; or
a random access scenario fallen back or switched from another random access type.

As at least one embodiment of the disclosure, the feedback message from the network device received by the terminal after sending the message A of 2-step random access includes:
a random access response message;
a random access fallback message; or
a backoff indication message.

As at least one embodiment of the disclosure, the information of the BWP where the random access selected by the terminal is located includes at least one of the following:
location and bandwidth of the BWP;
a subcarrier spacing of the BWP; or
whether the BWP uses an extended cyclic prefix (CP).

As at least one embodiment of the disclosure, the reason why the terminal selects the carrier where the random access is located includes one of the following.

The carrier is configured by the network device.

The carrier is selected by the terminal according to selection conditions for different types of carriers configured by the network device.

As at least one embodiment of the disclosure, the apparatus further includes a configuration module.

The configuration module is used to configure the terminal to record the related information of the random access.

As at least one embodiment of the disclosure, the apparatus further includes a request sending module.

The request sending module is configured to send a request message for requesting the terminal to report the related information of the random access to the terminal.

As at least one embodiment of the disclosure, the apparatus further includes: an indication receiving module.

The indication receiving module is configured to receive indication information sent by the terminal. The indication information is used to indicate that the terminal records the related information of the random access.

As at least one embodiment of the disclosure, the related information of the random access is carried by at least one of a target message or a random access report.

According to at least one embodiment of the disclosure, the related information of the random access initiated by the terminal is recorded by the terminal and reported to the network device, which helps the network device to configure one or more reasonable random access related parameters or perform network coverage optimization, thereby improving the random access efficiency and network performance.

It is to be noted that the information receiving apparatus provided by at least one embodiment of the disclosure is an apparatus capable of executing the above information receiving method, so all embodiments of the above information receiving method are applicable to the apparatus and all can achieve the same or similar beneficial effects.

As shown in FIG. 6, at least one embodiment of the disclosure also provides a network device, including a processor 600 and a transceiver 610. The transceiver 610 receives and transmits data under the control of the processor 600. The processor 600 is configured to receive related information of a random access reported by a terminal.

As at least one embodiment of the disclosure, the related information of the random access includes at least one of the following:
a type of the random access initiated by the terminal;
a scenario of the random access initiated by the terminal;
a feedback message from the network device received by the terminal after sending a message A of 2-step random access, or indication information indicating whether the terminal receives a random access fallback message after sending the message A of 2-step random access or whether to fall back according to the received random access fallback message;
time difference between the time when the terminal sends the message A of 2-step random access and the time when the terminal receives the feedback message from the network device;
whether contention is detected in the case where the terminal initiates 2-step random access;
whether configuration of the network device allows the terminal to switch or fall back to CBRA;
whether the configuration of the network device allows the terminal to switch or fall back to 4-step random access;
the number of times configured on the network device that the terminal attempts the 2-step random access before switching or falling back to the 4-step random access;
the number of messages A sent when the terminal switches or falls back to another type of random access from the 2-step random access;
a type of a carrier in which the random access initiated by the terminal is located;
the reason why the terminal selects the carrier where the random access is located;
whether the bandwidth part (BWP) where the current random access is located is the same as the BWP where the last random access is located;
information of the BWP where the random access selected by the terminal is located; or
a type of random access supported by the BWP where the random access selected by the terminal is located.

As at least one embodiment of the disclosure, the type of the random access includes at least one of the following:
2-step CBRA;
2-step CFRA;
4-step CBRA; or
4-step CFRA.

As at least one embodiment of the disclosure, the scenario of the random access includes at least one of the following:
an initial access scenario;
a handover scenario;
a reconfiguration scenario with synchronization;
a beam fault recovery (BFR) scenario; or
a random access scenario fallen back or switched from another random access type.

As at least one embodiment of the disclosure, the feedback message from the network device received by the terminal after sending the message A of 2-step random access includes:
a random access response message;
a random access fallback message; or
a backoff indication message.

As at least one embodiment of the disclosure, the information of the BWP where the random access selected by the terminal is located includes at least one of the following:
location and bandwidth of the BWP;
a subcarrier spacing of the BWP; or
whether the BWP uses an extended cyclic prefix (CP).

As at least one embodiment of the disclosure, the reason why the terminal selects the carrier where the random access is located includes one of the following.

The carrier is configured by the network device.

The carrier is selected by the terminal according to selection conditions for different types of carriers configured by the network device.

As at least one embodiment of the disclosure, the processor is further configured to configure the terminal to record related information of the random access.

As at least one embodiment of the disclosure, the processor is further configured to send a request message for requesting the terminal to report the related information of the random access to the terminal.

As at least one embodiment of the disclosure, the processor is further configured to receive indication information sent by the terminal. The indication information is used for indicating that the terminal records the related information of the random access.

As at least one embodiment of the disclosure, the related information of the random access is carried by at least one of a target message or a random access report.

According to at least one embodiment of the disclosure, the related information of the random access initiated by the terminal is recorded by the terminal and reported to the network device, which helps the network device to configure one or more reasonable random access related parameters or perform network coverage optimization, thereby improving the random access efficiency and network performance.

It is to be noted that the network device provided by at least one embodiment of the disclosure is a network device capable of executing the above information receiving method, so all embodiments of the above information receiving method are applicable to the network device and all can achieve the same or similar beneficial effects.

At least one embodiment of the disclosure further provides a communication device. The communication device is a network device and includes a memory, a processor and a computer program stored on the memory and runnable on the processor. When executing the program, the processor implements each process in the information receiving method embodiments as described above and can achieve the same technical effect, which is not described here to avoid repetition.

At least one embodiment of the disclosure also provides a computer readable storage medium, on which a computer program is stored. When executed by a processor, the program implements each process of the information receiving method embodiments as described above and can achieve the same technical effect, which is not described here to avoid repetition. The computer readable storage medium may be, such as a Read-Only Memory (ROM), a Random Access Memory (RAM), a magnetic disk or an optical disk.

Those skilled in the art may understand that the embodiments of the disclosure may be provided as methods, systems, or computer program products. Therefore, the disclosure may take the form of complete hardware embodiments, complete software embodiments or embodiments combining software and hardware. Moreover, the disclosure may take the form of a computer program product implemented on one or more computer readable storage media (including but not limited to a disk memory, an optical memory, etc.) containing computer available program codes.

The disclosure is described with reference to the flowcharts and/or block diagrams of the method, the device (system), and the computer program product according to the embodiments of the disclosure. It should be understood that, each process and/or block in the flowchart and/or block diagram and the combination of processes and/or blocks in the flowchart and/or block diagram may be implemented by a computer program instruction. These computer program instructions may be provided for a processor of a general-purpose computer, a special-purpose computer, an embedded processor or other programmable data processing devices to generate a machine, so that a device for realizing the functions specified in one or more processes of the flowchart and/or one or more blocks of the block diagram is generated through the instruction executed by a processor of a computer or other programmable data processing devices.

These computer program instructions may also be stored in the computer-readable storage medium capable of guiding the computer or other programmable data processing devices to operate in a particular way, so that the instructions stored in the computer-readable storage medium generate a paper product including an instruction device. The instruction device implements the specified functions in one or more flows of the flowchart and/or one or more blocks of the block diagram.

These computer program instructions may also be loaded on the computer or other programmable data processing devices, so that a series of operations are executed on the computer or other programmable devices to generate the computer-implemented processing, and the instructions executed on the computer or other programmable devices provide the operations for implementing the specified functions in one or more flows of the flowchart and/or one or more blocks of the block diagram.

It is to be understood that division of the modules above is only logic function division, and the modules may be completely or partially integrated to a physical entity and may also be physically separated in actual implementation. These modules may all be implemented in the form of software calling through processing elements and may all be implemented in the form of hardware. Also, part of modules may be implemented in the form of calling software by processing elements, and part of modules may be implemented in the form of hardware. For example, the determination module may be a separate processing element, and may also be integrated to a certain chip in the above apparatus for implementation. In addition, the determination module may also be stored in a memory of the above apparatus in the form of a program code, and called by a certain processing unit in the above apparatus to execute the functions of the above determination module. Implementation of other modules is similar thereto. Besides, these modules may completely or partially integrated together, and may also be independently implemented. The processing element herein may be an integrated circuit, and has a signal processing capability. During implementation, each operation of the method or each unit may be completed by means of an integrated logic circuit of hardware in the processing element or an instruction in the form of software.

For example, each module, unit, subunit or submodule may be one or more integrated circuits configured to implement the above method, such as one or more Application-Specific Integrated Circuits (ASICs), or, one or more Digital Signal Processors (DSPs), or, one or more Field-Programmable Gate Arrays (FPGAs). For another example, when one of the above modules is implemented in the form of calling a program code by a processing element, the processing element may be a general-purpose processor, such as a Central Processing Unit (CPU) or other processors that may call the program code. For another example, these modules may be integrated together and implemented in the form of System-On-a-Chip (SOC).

Terms "first", "second", etc., in the specification and claims of the disclosure are only for distinguishing similar objects, and does not represent a specific sequence or order of the objects. It is to be understood that data used like this may be interchanged as appropriate to implement the embodiments of the disclosure described herein in sequences except the illustrated or described ones, for example. In addition, terms "include" and "have" and any variations thereof are intended to cover nonexclusive inclusions. For example, a process, method, system, product, or device including a series of steps or units is not limited to the steps or units which have been listed but optionally further includes steps or units which are not listed or optionally further includes other steps or units intrinsic to the process, the method, the product, or the device. In addition, "and/or" used in the specification and claims represents at least one of the associated objects. For example, A and/or B and/or C represents the following seven cases: independent existence of A, independent existence of B, independent existence of C, existence of both A and B, existence of both B and C, existence of both A and C, and existence of A, B and C. Similarly, the limitation of "at least one of A or B" in the specification and claims shall be understood as "independent existence of A, independent existence of B, or existence of both A and B ".

The above is the optional implementation modes of the disclosure. It is to be pointed out that those of ordinary skill in the art may make improvements and variations without departing from the principle of the disclosure, and these improvements and variations shall fall within the scope of protection of the disclosure.

## Claims

1. An information reporting method, performed by a terminal, the method comprising: after a random access initiated by the terminal is completed,
determining (11) related information of the random access; and
reporting (12) the related information of the random access to a network device;
the method being **characterized by** the related information of the random access comprising at least one of:
a type of a carrier in which the random access initiated by the terminal is located;
information of the BWP where the random access selected by the terminal is located, wherein the information of the BWP where the random access selected by the terminal is located comprises at least one of: location and bandwidth of the BWP, or a subcarrier spacing of the BWP; or
a type of random access supported by the BWP where the random access selected by the terminal is located.

2. The method of claim 1, wherein determining (11) the related information of the random access comprises:
recording, by the terminal, the related information of the random access according to configuration of network management or configuration of a tracking collection entity, TCE, or configuration of a base station or pre-definition.

3. The method of claim 1, wherein reporting (12) the related information of the random access to the network device comprises:
receiving a request message sent by the network device for requesting the terminal to report the related information of the random access; and
reporting, according to the request message, the related information of the random access to the network device;
before receiving the request message sent by the network device for requesting the terminal to report the related information of the random access, the method further comprises:
sending indication information to the network device, the indication information being used for indicating that the terminal records the related information of the random access.

4. The method of claim 1, wherein reporting (12) the related information of the random access to the network device comprises:
reporting, by the terminal in an RRC connected state, the related information of the random access to the network device;
or,
reporting, in the process of the terminal entering the RRC connected state, the related information of the random access to the network device;
or,
reporting, in an idle state or inactive state, the related information of the random access to the network device.

5. An information receiving method, performed by a network device, the method comprising:
receiving (31), after a random access initiated by a terminal is completed, related information of the random access reported by the terminal;
the method being **characterized by** the related information of the random access comprising at least one of:
a type of a carrier in which the random access initiated by the terminal is located;
information of the BWP where the random access selected by the terminal is located, wherein the information of the BWP where the random access selected by the terminal is located comprises at least one of: location and bandwidth of the BWP, or a subcarrier spacing of the BWP; or
a type of random access supported by the BWP where the random access selected by the terminal is located.

6. The method of claim 5, before receiving (31) the related information of the random access reported by the terminal, further comprising:
configuring the terminal to record the related information of the random access.

7. The method of claim 5, before receiving (31) the related information of the random access reported by the terminal, further comprising:
sending a request message for requesting the terminal to report the related information of the random access to the terminal;
before sending the request message for requesting the terminal to report the related information of the random access to the terminal, the method further comprises:
receiving indication information sent by the terminal, the indication information being used for indicating that the terminal records the related information of the random access.

8. A communication device, comprising a memory, a processor and a program stored on the memory and runnable on the processor, wherein when executing the program, the processor implements the information reporting method of any one of claims 1-4, or when executing the program, the processor implements the information receiving method of any one of claims 5-7.

9. A computer readable storage medium, having stored a computer program thereon, wherein the program, when executed by a processor, implements operations of the information reporting method of any one of claims 1-4, or when executed by the processor, implements operations of the information receiving method of any one of claims 5-7.

## Patentansprüche

1. Informationenmeldeverfahren, das durch ein Endgerät durchgeführt wird, wobei das Verfahren Folgendes umfasst: nachdem ein Direktzugriff, der durch das Endgerät initiiert wird, fertiggestellt ist,
Bestimmen (11) von zugehörigen Informationen des Direktzugriffs; und
Melden (12) der zugehörigen Informationen des Direktzugriffs an eine Netzwerkvorri chtung;
wobei das Verfahren **dadurch gekennzeichnet ist, dass** die zugehörigen Informationen des Direktzugriffs mindestens eines aus Folgendem umfassen:
eine Art eines Trägers, in dem sich der Direktzugriff, der durch das Endgerät initiiert wird, befindet;
Informationen des BWP, wo sich der Direktzugriff, der durch das Endgerät ausgewählt wird, befindet, wobei die Informationen des BWP, wo sich der Direktzugriff, der durch das Endgerät ausgewählt wird, befindet, mindestens eines aus Folgendem umfasst: Standort und Bandbreite des BWP oder ein Unterträgerabstand des BWP; oder
eine Art von Direktzugriff, die durch den BWP unterstützt wird, wo sich der Direktzugriff, der durch das Endgerät ausgewählt wird, befindet.

2. Verfahren nach Anspruch 1, wobei das Bestimmen (11) der zugehörigen Informationen des Direktzugriffs Folgendes umfasst:
Aufzeichnen, durch das Endgerät, der zugehörigen Informationen des Direktzugriffs gemäß einer Konfiguration von Netzwerkmanagement oder Konfiguration einer Verfolgungssammlungseinheit (tracking collection entity, TCE) oder Konfiguration einer Basisstation oder Vordefinition.

3. Verfahren nach Anspruch 1, wobei das Melden (12) der zugehörigen Informationen des Direktzugriffs an die Netzwerkvorrichtung Folgendes umfasst:
Empfangen einer Anforderungsnachricht, die von der Netzwerkvorrichtung gesendet wird, zum Auffordern des Endgeräts, die zugehörigen Informationen des Direktzugriffs zu melden; und
Melden, gemäß der Anforderungsnachricht, der zugehörigen Informationen des Direktzugriffs an die Netzwerkvorrichtung;
vor dem Empfangen der Anforderungsnachricht, die von der Netzwerkvorrichtung gesendet wird, zum Auffordern des Endgeräts, die zugehörigen Informationen des Direktzugriffs zu melden, umfasst das Verfahren ferner Folgendes:
Senden von Anzeigeinformationen an die Netzwerkvorrichtung, wobei die Anzeigeinformationen zum Angeben verwendet werden, dass das Endgerät die zugehörigen Informationen des Direktzugriffs aufzeichnet.

4. Verfahren nach Anspruch 1, wobei das Melden (12) der zugehörigen Informationen des Direktzugriffs an die Netzwerkvorrichtung Folgendes umfasst:
Melden, durch das Endgerät in einem RRC-verbundenen Zustand, der zugehörigen Informationen des Direktzugriffs an die Netzwerkvorrichtung;
oder
Melden, in dem Prozess, in dem das Endgerät in den RRC-verbundenen Zustand eintritt, der zugehörigen Informationen des Direktzugriffs an die Netzwerkvorrichtung;
oder
Melden, in einem Ruhezustand oder inaktiven Zustand, der zugehörigen Informationen des Direktzugriffs an die Netzwerkvorrichtung.

5. Informationenempfangsverfahren, das durch eine Netzwerkvorrichtung durchgeführt wird, wobei das Verfahren Folgendes umfasst:
Empfangen (31), nachdem ein Direktzugriff, der von einem Endgerät begonnen wird, fertiggestellt ist, von zugehörigen Informationen des Direktzugriffs, der von dem Endgerät gemeldet wird;
wobei das Verfahren **dadurch gekennzeichnet ist, dass** die zugehörigen Informationen des Direktzugriffs mindestens eines aus Folgendem umfassen:
eine Art eines Trägers, in dem sich der Direktzugriff, der durch das Endgerät initiiert wird, befindet;
Informationen des BWP, wo sich der Direktzugriff, der durch das Endgerät ausgewählt wird, befindet, wobei die Informationen des BWP, wo sich der Direktzugriff, der durch das Endgerät ausgewählt wird, befindet, mindestens eines aus Folgendem umfasst: Standort und Bandbreite des BWP oder eines Unterträgerabstands des BWP; oder
eine Art von Direktzugriff, die durch den BWP unterstützt wird, wo sich der Direktzugriff, der durch das Endgerät ausgewählt wird, befindet.

6. Verfahren nach Anspruch 5, das, vor dem Empfangen (31) der zugehörigen Informationen des Direktzugriffs, der von dem Endgerät gemeldet wird, ferner Folgendes umfasst:
Konfigurieren des Endgeräts, um die zugehörigen Informationen des Direktzugriffs aufzuzeichnen.

7. Verfahren nach Anspruch 5, das, vor dem Empfangen (31) der zugehörigen Informationen des Direktzugriffs, der von dem Endgerät gemeldet wird, ferner Folgendes umfasst:
Senden einer Anforderungsnachricht zum Auffordern des Endgeräts, die zugehörigen Informationen des Direktzugriffs zu melden;
vor dem Senden der Anforderungsnachricht zum Auffordern des Endgeräts, die zugehörigen Informationen des Direktzugriffs zu melden, umfasst das Verfahren ferner Folgendes:
Empfangen von Anzeigeinformationen, die von dem Endgerät gesendet werden, wobei die Anzeigeinformationen zum Angeben verwendet werden, dass das Endgerät die zugehörigen Informationen des Direktzugriffs aufzeichnet.

8. Kommunikationsvorrichtung, umfassend einen Speicher, einen Prozessor und ein Programm, das auf dem Speicher gespeichert wird und auf dem Prozessor ausgeführt werden kann, wobei, wenn das Programm ausgeführt wird, der Prozessor das Informationenmeldeverfahren nach einem der Ansprüche 1-4 implementiert, oder, wenn das Programm ausgeführt wird, der Prozessor das Informationenempfangsverfahren nach einem der Ansprüche 5-7 implementiert.

9. Computerlesbares Speichermedium, das darauf ein Computerprogramm gespeichert hat, wobei das Programm, wenn es durch einen Prozessor ausgeführt wird, Vorgänge des Informationenmeldeverfahrens nach einem der Ansprüche 1-4 implementiert, oder, wenn es durch den Prozessor ausgeführt wird, Vorgänge des Informationenempfangsverfahrens nach einem der Ansprüche 5-7 implementiert.

## Revendications

1. Procédé de rapport d'informations, exécuté par un terminal,
le procédé comprenant : après qu'un accès aléatoire initié par le terminal soit terminé,
la détermination (11) d'informations associées à l'accès aléatoire ; et
le rapport (12) des informations associées à l'accès aléatoire à un dispositif réseau ;
le procédé étant **caractérisé par** les informations associées à l'accès aléatoire comprenant au moins l'un des éléments suivants :
un type de support dans lequel se situe l'accès aléatoire initié par le terminal ;
des informations du BWP où se trouve l'accès aléatoire sélectionné par le terminal, les informations du BWP où se trouve l'accès aléatoire sélectionné par le terminal comprenant au moins l'un des éléments suivants : l'emplacement et la bande passante du BWP, ou un espacement des sous-porteuses du BWP ; ou
un type d'accès aléatoire supporté par le BWP où se trouve l'accès aléatoire sélectionné par le terminal.

2. Procédé selon la revendication 1, dans lequel la détermination (11) des informations associées à l'accès aléatoire comprend :
l'enregistrement, par le terminal, des informations associées à l'accès aléatoire selon une configuration de gestion de réseau ou une configuration d'une entité de collecte de suivi, TCE, ou une configuration d'une station de base ou une pré-définition.

3. Procédé selon la revendication 1, dans lequel le rapport (12) des informations associées à l'accès aléatoire au dispositif réseau comprend :
la réception d'un message de requête envoyé par le dispositif réseau pour demander au terminal de rapporter les informations associées à l'accès aléatoire ; et
le rapport, selon le message de demande, des informations associées à l'accès aléatoire au dispositif réseau ;
avant de la réception du message de requête envoyé par le dispositif de réseau pour demander au terminal de rapporter les informations associées à l'accès aléatoire, le procédé comprend en outre :
l'envoi d'informations d'indication au dispositif réseau, les informations d'indication étant utilisées pour indiquer que le terminal enregistre les informations associées à l'accès aléatoire.

4. Procédé selon la revendication 1, dans lequel le rapport (12) des informations associées à l'accès aléatoire au dispositif réseau comprend :
le rapport, par le terminal dans un état connecté RRC, des informations associées à l'accès aléatoire au dispositif réseau ; ou,
le rapport, lors du processus d'entrée du terminal dans l'état connecté RRC, des informations associées à l'accès aléatoire au dispositif réseau ; ou,
le rapport, dans un état inactif ou un état inactif, des informations associées à l'accès aléatoire au dispositif réseau.

5. Procédé de réception d'informations, exécuté par un dispositif réseau, le procédé comprenant :
la réception (31), après qu'un accès aléatoire initié par un terminal soit terminé,
d'informations associées à l'accès aléatoire signalées par le terminal ;
le procédé étant **caractérisé par** les informations associées à l'accès aléatoire comprenant :
au moins un parmi :
un type de support dans lequel se situe l'accès aléatoire initié par le terminal ;
des informations du BWP où se trouve l'accès aléatoire sélectionné par le terminal, les informations du BWP où se trouve l'accès aléatoire sélectionné par le terminal comprenant au moins l'un des éléments suivants : l'emplacement et la bande passante du BWP, ou un espacement des sous-porteuses du BWP ; ou
un type d'accès aléatoire supporté par le BWP où se trouve l'accès aléatoire sélectionné par le terminal.

6. Procédé selon la revendication 5, avant la réception (31) des informations associées à l'accès aléatoire signalées par le terminal, comprenant en outre :
la configuration du terminal pour enregistrer les informations associées à l'accès aléatoire.

7. Procédé selon la revendication 5, avant la réception (31) des informations associées à l'accès aléatoire signalées par le terminal, comprenant en outre :
l'envoi d'un message de requête pour demander au terminal de rapporter les informations associées à l'accès aléatoire au terminal ;
avant l'envoi du message de requête pour demander au terminal de rapporter les informations associées à l'accès aléatoire au terminal, le procédé comprend en outre :
la réception d'informations d'indication envoyées par le terminal, les informations d'indication étant utilisées pour indiquer que le terminal enregistre les informations associées à l'accès aléatoire.

8. Dispositif de communication, comprenant une mémoire, un processeur et un programme stocké dans la mémoire et exécutable sur le processeur, dans lequel lors de l'exécution du programme, le processeur met en oeuvre le procédé de rapport d'informations selon l'une quelconque des revendications 1 à 4, ou lors de l'exécution du programme, le processeur met en oeuvre le procédé de réception d'informations selon l'une quelconque des revendications 5 à 7.

9. Support de stockage lisible par ordinateur, sur lequel est stocké un programme informatique, dans lequel le programme, lorsqu'il est exécuté par un processeur, met en oeuvre des opérations du procédé de rapport d'informations selon l'une quelconque des revendications 1 à 4, ou lorsqu'il est exécuté par le processeur, met en oeuvre des opérations du procédé de réception d'informations selon l'une quelconque des revendications 5 à 7.
